# EUROPÄISCHE PATENTANMELDUNG

(11) **EP 3 809 018 A1**
(43) Veröffentlichungstag der Anmeldung: **21.04.2021**
(21) Anmeldenummer: 19204102.8
(22) Anmeldetag: 18.10.2019
(51) Int. Cl.: F16H 55/18, F16H 55/17

(54) **ZAHNRAD FÜR EIN SPIELFREIES GETRIEBE**

(71) Anmelder: Maxon International AG, 6072 Sachseln (CH)
(72) Erfinder: Wirsich, Nico, 79331 Teningen (DE)
(74) Vertreter: Grünecker Patent- und Rechtsanwälte PartG mbB

(57) **Zusammenfassung**

Die vorliegende Erfindung zeigt ein Zahnrad für ein spielfreies Getriebe mit einem ersten Zahnradteil und einem zweiten Zahnradteil, deren Zahneingriffsbereiche in Richtung der Rotationsachse des Zahnrads gesehen nebeneinander angeordnet sind und die mittels mindestens einem in Umfangsrichtung des Zahnrads wirkenden Federelement gegeneinander verspannt sind. Es ist die Aufgabe der vorliegenden Erfindung, ein Zahnrad bereitzustellen, das einen geringen Bauraumbedarf hat und daher auch in kleinen Getrieben gut verwendbar und montierbar ist. Hierzu ist erfindungsgemäß vorgesehen, dass das mindestens eine Federelement mindestens zwei an jeweils einem ihrer Enden miteinander verbundene stabförmige Bereiche umfasst, wobei mindestens einer der stabförmige Bereiche derart ausgerichtet ist, dass der mindestens eine stabförmige Bereich mit seiner Längserstreckung im Wesentlichen quer zu einer senkrecht zur Rotationsachse des Zahnrades verlaufenden Ebene ausgerichtet ist.

## Beschreibung

Die vorliegende Erfindung betrifft ein Zahnrad für ein spielfreies Getriebe mit einem ersten Zahnradteil und einem zweiten Zahnradteil, deren Zahneingriffsbereiche in Richtung der Rotationsachse des Zahnrads gesehen nebeneinander angeordnet sind und die mittels mindestens einem in Umfangsrichtung des Zahnrads wirkenden Federelement gegeneinander verspannbar sind.

Derartige Zahnräder für spielfreie Getriebe mit zwei mittels eines Federelements gegeneinander verspannten Zahnradteilen sind bereits aus dem Stand der Technik bekannt. So zeigt beispielsweise die DE 203 13 595 U1 ein geteiltes Zahnrad mit zwei Zahnradteilen, deren Zahneingriffsbereiche in axialer Richtung nebeneinander angeordnet sind. Die beiden Zahnradteile weisen an ihren einander zugewandten Stirnseiten deckungs- und lagegleiche Aussparungen auf, in denen wellenförmige Federelemente angeordnet sind, mittels derer die beiden Zahnradteile gegeneinander verspannt sind. Die wellenförmigen Federelemente sind derart ausgebildet, dass sich ihre Wellenberge und Wellentäler in radialer Richtung des Zahnrads erstrecken. Die Federelemente haben daher eine relativ große Erstreckung sowohl in radialer Richtung des Zahnrads als auch in Umfangsrichtung des Zahnrads.

Nachteilig an diesem Zahnrad ist der relativ große Bauraumbedarf der Federelemente, vor allem in radialer Richtung des Zahnrads.

Es ist daher die Aufgabe der vorliegenden Erfindung, ein Zahnrad für ein spielfreies Getriebe bereitzustellen, das einen geringen Bauraumbedarf in radialer Richtung hat und daher auch in kleinbauenden Getrieben eingesetzt werden kann. Zudem soll insbesondere bei kleinbauenden Getrieben eine einfache Montage möglich sein.

Hierzu ist erfindungsgemäß vorgesehen, dass das mindestens eine Federelement mindestens zwei an jeweils einem ihrer Enden miteinander verbundene stabförmige Bereiche umfasst, wobei mindestens einer der stabförmigen Bereiche derart ausgerichtet ist, dass der mindestens eine stabförmige Bereich mit seiner Längserstreckung im Wesentlichen quer zu einer senkrecht zur Rotationsachse des Zahnrads verlaufenden Ebene ausgerichtet ist. Unter quer ist ein Winkelbereich von größer 0° bis 90°, bevorzugt 45° bis 90°, und weiter bevorzugt von 67,5° bis 90° zu verstehen. Wobei 90° parallel zur Rotationsachse des Zahnrades bedeutet.

Mit dem Begriff "stabförmig" ist im vorliegenden Kontext gemeint, dass die Breite und die Dicke des Bauteils, im vorliegenden Fall also der entsprechende Bereich des Federelements, im Vergleich zur Längserstreckung des Bauteils klein ist. Die Längserstreckung des Stabes bezeichnet die Richtung der langen Achse. In seiner Längserstreckung muss der stabförmige Bereich nicht linear sein, sondern kann auch gekrümmt oder bogenförmig verlaufen. Weiter muss der stabförmige Bereich keinen konstanten Querschnitt aufweisen, sondern kann beispielsweise an Stellen mit höherer Belastung einen größeren Querschnitt aufweisen. Hierdurch kann eine verbesserte Federwirkung erzielt werden.

Die axiale Richtung des Zahnrades entspricht der Richtung der Rotationsachse des Zahnrades. Der mindestens eine stabförmige Bereich des Federelements kann sich daher mit seiner Längserstreckung aus einer senkrecht zur Rotationsachse des Zahnrades angeordneten Ebene aus dieser Ebene heraus erstrecken. Der mindestens eine stabförmige Bereich muss in seiner Längserstreckung nicht parallel zur Rotationsachse sein, sondern kann auch schräg dazu verlaufen. Vorzugsweise weist der stabförmige Bereich über seine komplette Länge den gleichen Abstand zur Rotationsachse des Zahnrades auf. Es kann aber auch vorgesehen sein, dass der stabförmige Bereich auch eine radiale Komponente aufweist. Damit ist gemeint, dass die Längsachse des stabförmigen Bereichs einen Winkel mit der Rotationsachse des Zahnrads einschließt. Allerdings ist der mindestens eine stabförmige Bereich mit seiner Längserstreckung nie nur in radialer Richtung, d.h. in einer zu den Stirnflächen des Zahnrads parallelen Ebene angeordnet. Das mindestens eine Federelement ist in radialer Richtung i.a.R. sehr flach und benötigt daher geringeren Bauraum. Durch das erfindungsgemäße Federelement können Toleranzen im Getriebe ausgeglichen und das Spiel reduziert werden.

Zwar zeigt die DE 10 2008 011 147 A1 bereits ein spielfreies Planetengetriebe mit geteilten Planetenrädern, bei denen die beiden Teile der Planetenräder über Federstäbe gegeneinander vorgespannt sind, wobei die Federstäbe parallel zu der Rotationsachse der Planetenräder angeordnet sind. Allerdings ist die Verankerung der Federstäbe in den beiden Teilen der Planetenräder relativ komplex und die Montage insbesondere bei kleinbauenden Getrieben aufwendig.

Eine einfache Ausgestaltung des Zahnrads, die auch eine einfache Montage ermöglicht, sieht vor, dass das erste Zahnradteil und das zweite Zahnradteil an ihren einander zugewandten Stirnseiten jeweils mindestens eine Ausnehmung aufweisen, wobei mindestens einer der stabförmigen Bereiche des mindestens einen Federelement mit einem Ende in der Ausnehmung des ersten Zahnradteils und mit dem anderen Ende in der Ausnehmung des zweiten Zahnradteils angeordnet ist. Die Ausnehmungen bzw. die Wandung der Ausnehmungen bilden dann Anschläge aus, an denen das Federelement anliegt und die in Kombination mit dem Federelement die Verspannung der Zahnradteile gegeneinander ermöglichen. Dieser stabförmige Bereich stellt daher die federnde Verbindung zwischen den beiden Zahnradteilen dar. Das mindestens eine Federelement kann einfach in die Ausnehmungen eingelegt werden.

Ferner kann vorgesehen sein, dass einer der stabförmigen Bereiche des mindestens einen Federelements als Schenkel ausgebildet ist, der mit seiner Längserstreckung im Wesentlichen quer zu einer senkrecht zur Rotationsachse des Zahnrades verlaufenden Ebene ausgerichtet ist, und der andere stabförmige Bereich des mindestens einen Federelement als Steg ausgebildet ist, der sich in Umfangsrichtung des Zahnrades erstreckt. Der als Steg ausgebildete stabförmige Bereich ist vorzugsweise komplett in einer Ausnehmung in einem der beiden Zahnradteile aufgenommen. Dies ermöglicht eine einfache Montage. Der als Steg ausgebildete stabförmige Bereich hat in seiner Längserstreckung vorzugsweise die Form eines Kreisbogens.

In einer weiteren Ausgestaltung kann vorgesehen sein, dass mindestens zwei der stabförmigen Bereiche des mindestens einen Federelements einen spitzen Winkel miteinander einschließen. Wie oben beschrieben, ist einer dieser Bereiche ein Steg, der andere ein Schenkel. Die Längsachsen dieser beiden Bereiche, also die Längsachse des Steges und die Längsachse des Schenkels, schließen den spitzen Winkel miteinander ein. Ein Verdrehen der beiden stabförmigen Bereiche des Federelements gegeneinander, wie es beispielsweise bei der Montage des Zahnrades mit einem Gegenzahnrad erfolgt, führt daher zu einer Vorspannung des Federelements. Im montierten Zustand führt dies zu Spielfreiheit zwischen dem Zahnrad und dem mit dem Zahnrad in Eingriff stehenden Gegenzahnrad. Beim Spannen der Feder entsteht keine axiale Kraftkomponente, die zu Reibung und Verschleiß im Getriebe führt.

In einer bevorzugten Ausführungsform kann vorgesehen sein, dass das mindestens eine Federelement eine Mehrzahl von an ihren Enden miteinander verbundenen stabförmigen Bereichen umfasst, die abwechselnd als Stege und als Schenkel ausgebildet sind. Jeder Schenkel ist daher an einem seiner Enden mit einem ersten Steg verbunden und an seinem anderen Ende mit einem zweiten Steg. Vorzugsweise schließt jeder Schenkel mit jedem damit verbundenen Steg wiederum einen spitzen Winkel miteinander ein. Das Federelement erhält dadurch eine Mäanderform. Durch die Ausrichtung der Schenkel im Wesentlichen quer zu einer senkrecht zur Rotationsachse des Zahnrads verlaufenden Ebene sind in Umfangsrichtung aufeinanderfolgende Stege des Federelements in Richtung der Rotationsachse des Zahnrades gesehen beabstandet zueinander angeordnet, sodass die Stege abwechselnd in dem ersten Zahnradteil und in dem zweiten Zahnradteil angeordnet sind. Die Stege dienen dann zur Fixierung des Federelements in den Zahnradteilen, die Schenkel sind die Federbereiche des Federelements. Das entsprechend ausgebildete Federelement kann einfach in die Zahnradteile eingesteckt werden.

Es kann auch vorgesehen sein, dass das erste Zahnradteil und das zweite Zahnradteil jeweils eine Mehrzahl von Ausnehmungen aufweisen und die Stege des mindestens einen Federelements abwechselnd in einer Ausnehmung des ersten Zahnradteils und in einer Ausnehmung des zweiten Zahnradteils angeordnet sind. Somit sind in jedem Zahnradteil mehrere durch die Ausnehmungen ausgebildete Anschläge für das Federelement vorhanden. Das Federelement umfasst dann vorzugsweise ebenfalls mehrere Schenkel und mehrere Stege, sodass es als Hülsenabschnitt bzw. als Hülse ausgebildet ist. Hierdurch wird die Montage vereinfacht, jeder Steg kann einfach in eine der Ausnehmungen eingesteckt werden. Vorzugsweise sind die Ausnehmungen gleichmäßig um den Umfang der beiden Zahnradteile verteilt, sodass die wirkende Vorspannkraft möglichst gleichmäßig aufgebracht wird.

In einer einfachen Ausgestaltung kann vorgesehen werden, dass die Ausnehmungen in den beiden Zahnradteilen als zylindrische Bohrungen ausgebildet sind.

Es kann aber auch vorgesehen werden, dass die Ausnehmungen in den beiden Zahnradteilen als taschenförmige Bohrungen bzw. Langlöcher ausgebildet sind. Dies ist insbesondere bei kleineren Bauteilen vorteilhaft, bei denen das Federelement nur eine geringere Anzahl an Schenkeln und Stegen umfasst. In diesem Fall weisen die Stege eine größere Länge auf und können dennoch einfach in die taschenförmigen Bohrungen eingesteckt werden.

In noch einer weiteren Ausführungsform kann vorgesehen sein, dass die Ausnehmungen in den beiden Zahnradteilen einen Vorsprung als Montage- bzw. Transportsicherung für das mindestens eine Federelement aufweisen. Dieser Vorsprung ist vorzugsweise derart ausgebildet, dass das Federelement bei der Montage problemlos an dem Vorsprung vorbei in die Ausnehmungen eingeführt werden kann und dennoch ein gewisser Formschluss zwischen dem Federelement und den entsprechenden Zahnradteilen besteht. Dieser formschlüssige Halt des Federelements in den Ausnehmungen kann beispielsweise als Montage- bzw. Transportsicherung dienen.

In noch einer weiteren vorteilhaften Ausführungsform kann vorgesehen sein, dass das erste Zahnradteil und das zweite Zahnradteil identisch ausgebildet sind. Durch diese Bauteilgleichheit wird eine Vereinfachung des Systems erzielt.

Um eine besonders gleichmäßige Kräfteverteilung zu erhalten, kann vorgesehen werden, dass sich das Federelement um den gesamten Umfang des Zahnrads erstreckt. Durch die Stege und die die Stege miteinander verbindenden federnden Schenkel wird eine Fläche aufgespannt, die im Wesentlichen hülsenförmig ist. Die durch die Schenkel und/oder Stege ausgebildete Mantelfläche dieser Hülse kann konisch oder zylindrisch ausgebildet sein.

In einer besonders einfachen Ausgestaltung ist das Federelement ringförmig gebogen und/oder geschlossen. Das Federelement ist dann tatsächlich eine Hülse, die bei der Montage sehr einfach in die Ausnehmungen in den beiden Zahnradteilen eingesteckt werden kann.

Es kann aber auch vorgesehen werden, dass das Federelement vor der Montage rechteckig flach oder streifenförmig ist und bei der Montage in den beiden Zahnradteilen ringförmig gebogen und/oder geschlossen wird. Hierdurch wird eine besonders einfache Herstellung des Federelements ermöglicht.

In noch einer weiteren Ausführungsform kann vorgesehen sein, dass der Querschnitt des Federelements rund ist. Das Federelement kann dann einfach aus einem Draht hergestellt werden, der in die gewünschte Wellen- bzw. Mäanderform gebogen wird. Es wäre aber auch möglich, dass das Federelement aus einem Blechstreifen gestanzt oder geschnitten wird, beispielsweise mittels Laser. In diesem Fall weist das Federelement einen im Wesentlichen rechteckigen Querschnitt auf.

In einer vorteilhaften Ausführung liegt eine mögliche Federrate des Federelements in einem Bereich zwischen 2 und 20 mNm/°, vorzugsweise zwischen 5 und 10 mNm/° und besonders bevorzugt beträgt die Federrate 7,8 mNm/°.

In noch einer weiteren vorteilhaften Ausführungsform kann vorgesehen werden, dass das Zahnrad als Planetenrad für ein Planetengetriebe ausgebildet ist. Da die beiden Zahnradteile als Gleichteile bzw. gleich ausgebildet sind, können beide Zahnradteile als leistungsübertragene Zahnräder ausgebildet sein und eine Drehrichtungsumkehr des Zahnrads im Betrieb ist möglich. Alternativ kann das Zahnrad aber auch in einem Stirnradgetriebe verwendet werden.

Zudem bezieht sich die Erfindung auch auf ein spielfreies Getriebe mit mindestens einem gemäß der oben beschriebenen Varianten ausgeführten Zahnrad. Dadurch können Reibung und Verschleiß in dem Getriebe reduziert werden.

Im Folgenden wird die Erfindung anhand von Figuren näher erläutert. Es zeigen:
Fig. 1: Explosionsdarstellung einer ersten Ausführungsform eines erfindungsgemäßen Zahnrads,
Fig. 2: ein Zahnradteil des Zahnrads aus Fig. 1,
Fig. 3: Federelement des Zahnrads aus Fig. 1,
Fig. 4: das Zahnrad aus Fig. 1 mit teilweise montiertem Federelement,
Fig. 5: Schnitt durch das Zahnrad aus Fig. 1 im montierten Zustand in Längsrichtung,
Fig. 6: zweite Ausführungsform eines Federelements für das Zahnrad aus Fig. 1,
Fig. 7: dritte Ausführungsform eines Federelements für das Zahnrad aus Fig. 1,
Fig. 8: Explosionsdarstellung einer zweiten Ausführungsform eines erfindungsgemäßen Zahnrads,
Fig. 9: Schnitt durch das Zahnrad aus Fig. 8 im montierten Zustand in axialer Richtung,
Fig. 10: Schnitt durch das Zahnrad aus Fig. 8 im montierten Zustand in radialer Richtung,
Fig. 11: Federelement für das Zahnrad aus Fig. 8,
Fig. 12: eine schematische Darstellung einer Abwicklung eines Bereichs einer weiteren Ausführungsform eines Federelements,
Fig. 13: eine schematische Darstellung einer Abwicklung eines Bereichs einer weiteren Ausführungsform eines Federelements und
Fig. 14: eine schematische Darstellung einer Abwicklung eines Bereichs einer weiteren Ausführungsform eines Federelements.

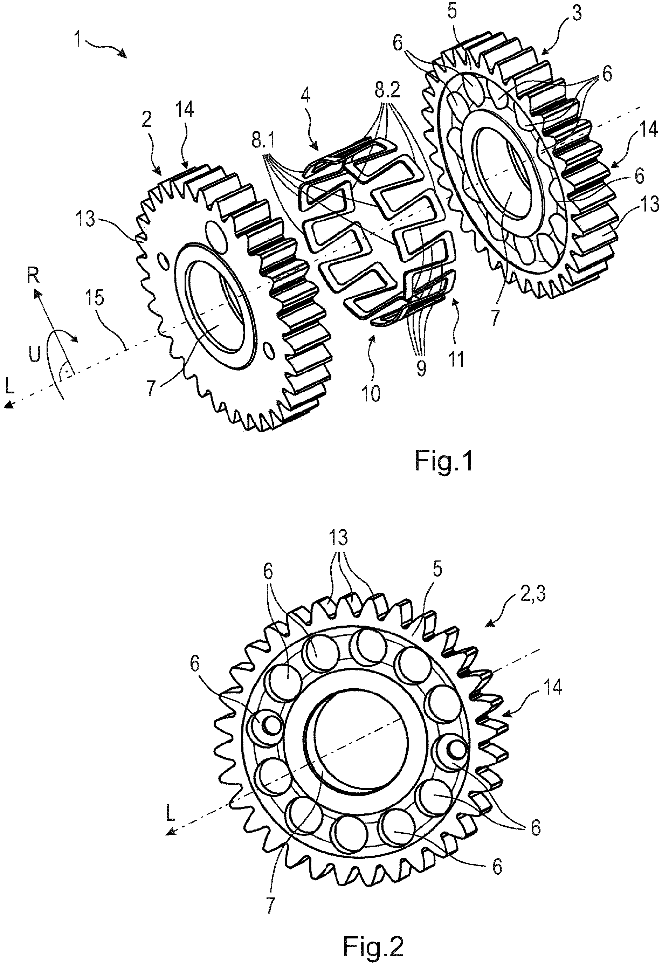

Fig. 1 zeigt eine erste Ausführungsform des erfindungsgemäßen Zahnrads 1 in Explosionsdarstellung. Das Zahnrad 1 umfasst ein erstes Zahnradteil 2 und ein zweites Zahnradteil 3, die mittels eines Federelements 4 gegeneinander verspannt werden können. Das erste Zahnradteil 2 und das zweite Zahnradteil 3 sind als Gleichteile ausgebildet. Mittig weisen die beiden Zahnradteile 2, 3 eine Nabe 7 auf, mit der sie auf eine Achse bzw. eine Welle aufgesteckt werden können. Die beiden Zahnradteile 2, 3 weisen jeweils auf einer Stirnseite 5 Ausnehmungen 6 auf. Im montierten Zustand des Zahnrads 1 sind die beiden Zahnradteile 2, 3 derart ausgerichtet, dass die Stirnseiten 5 mit den Ausnehmungen 6 einander zugewandt sind. Die Ausnehmungen 6 der beiden Zahnradteile 2, 3 sind in Umfangsrichtung gleichmäßig um die Nabe 7 herum angeordnet. In der in den Figuren 1 bis 5 gezeigten ersten Ausführungsform weist jedes Zahnradteil 2, 3 zwölf Ausnehmungen 6 auf. Im ersten Ausführungsbeispiel des Zahnrads 1 sind die Ausnehmungen 6 als zylindrische Sacklochbohrungen ausgeführt.

In der in den Figuren 1 bis 5 gezeigten ersten Ausführungsform umfasst das Federelement 4 eine Mehrzahl stabförmiger Bereiche 8.1, 8.2, 9, die jeweils an ihren Enden miteinander verbunden sind. Die Längserstreckung dieser stabförmigen Bereiche 8.1, 8.2, 9 ist größer als ihre Breite und Dicke. Die stabförmigen Bereiche müssen in ihrer Längsausrichtung nicht ausschließlich linear sein, sondern können zumindest bereichsweise auch einen gekrümmten Verlauf aufweisen. Weiter können die stabförmigen Bereiche auch einen variablen Querschnitt aufweisen. So können diese beispielsweise an Stellen mit höherer Belastung einen größeren Querschnitt aufweisen. Die stabförmigen Bereiche sind als Stege 8.1, 8.2 und Schenkel 9 ausgebildet. Vereinfacht kann die Längsachse auch eine Verbindungslinie des Anfangs- und Endpunkts eines stabförmigen Bereichs sein.

Die Schenkel 9 erstrecken sich in axialer Richtung L, d.h. in Richtung der Rotationsachse 15 des Zahnrads 1. Die Schenkel 9 weisen über ihre gesamte Länge ungefähr einen konstanten radialen Abstand zur Rotationsachse 15 auf. Die Längsachse der Schenkel 9 ist dabei windschief zur Rotationsachse 15 angeordnet. Es wäre aber auch ein paralleler Verlauf der Längsachse der Schenkel 9 zur Rotationsachse möglich. Zudem können die Schenkel 9 auch eine gewisse radiale Erstreckung haben. Damit ist gemeint, dass die Längsachse der Schenkel 9 einen Winkel mit der Rotationsachse 15 des Zahnrads 1 einschließt. Mit anderen Worten, die Schenkel können mit ihrer Längsachse einen Winkel mit einer senkrecht zur Rotationsachse des Zahnrads angeordneten Ebene einschließen, also einer Ebene die parallel zur Stirnseite der Zahnradteile ist.

Die Stege 8.1, 8.2 erstrecken sich in Umfangsrichtung U des Zahnrads 1. Daher kann jeder Steg 8.1, 8.2 kreisbogenförmig um die Rotationsachse 15 gekrümmt oder stabförmig ausgebildet sein. Jeder Steg 8.1, 8.2 ist an jedem seiner Enden mit jeweils einem der Schenkel 9 verbunden. Das andere Ende des jeweiligen Schenkels 9 ist mit dem in Umfangsrichtung U danebenliegenden, zweiten Steg 8.2, 8.1 verbunden. Dadurch sind nebeneinanderliegende erste Stege 8.1 und zweite Stege 8.2 in axialer Richtung L gesehen, d.h. in Richtung der Rotationsachse 15 gesehen, beabstandet zueinander. Das Federelement 4 weist also einen Kopfbereich 10 auf, welcher jeweils durch die ersten Stege 8.1 ausgebildet wird und im Wesentlichen kreisförmig ist. Die zweiten Stege 8.2 bilden einen Fußbereich 11 des Federelements 4 aus, der im Wesentlichen ebenfalls kreisförmig ist. Der Kopfbereich 10 und der Fußbereich 11 des Federelements 4 sind in axialer Richtung L gesehen beabstandet zueinander. Im ersten Ausführungsbeispiel des Zahnrads 1 umfasst das Federelement 4 sowohl im Kopfbereich 10 als auch im Fußbereich 11 jeweils zwölf Stege 8.1, 8.2. Die Stege 8.1, 8.2 sind durch 24 Schenkel 9 miteinander verbunden. Sowohl die ersten Stege 8.1 als auch die zweiten Stege 8.2 schließen mit den beiden mit ihnen verbundenen Schenkeln 9 jeweils einen spitzen Winkel β ein. Dieser Winkel β ist an allen Verbindungsstellen identisch und weist einen Wert von etwa 80° auf. Das Federelement 4 weist also eine Wellenform auf. Dadurch, dass der Winkel β ein spitzer Winkel ist, ist das Federelement 4 mäanderförmig. Der Abstand zwischen zwei auf einer Kreislinie nebeneinanderliegenden Stegen, also der Abstand zwischen den ersten Stegen 8.1 im Kopfbereich 10 des Federelements 4 und der Abstand zwischen den zweiten Stegen 8.2 im Fußbereich 11 des Federelements 4, ist geringer als die Länge der ersten und zweiten Stege 8.1, 8.2. Vorzugsweise weisen alle Stege 8.1, 8.2 eine gleiche Länge auf. Ebenso weisen vorzugsweise alle Schenkel 9 eine gleiche Länge auf.

In Fig. 2 ist eines der Zahnradteile 2, 3 in perspektivischer Darstellung gezeigt. Die Stirnseite 5, in der die Ausnehmungen 6 angeordnet sind, ist nach vorne gewandt. Das Zahnradteil 2, 3 umfasst einen äußeren Zahneingriffsbereich 14 mit darin ausgebildeten Zähnen 13 und die mittige Nabe 7. Zwischen der Nabe 7 und den Zahneingriffsbereich 14 sind in der Stirnseite 5 die Ausnehmungen 6 ausgebildet. Die Ausnehmungen 6 sind als zylindrische Sackbohrungen ausgebildet und gleichmäßig um den Umfang verteilt. In dem in Figuren 1 bis 5 gezeigten ersten Ausführungsbeispiel des Zahnrads 1 sind in jedem der Zahnradteile 2, 3 zwölf Ausnehmungen ausgebildet.

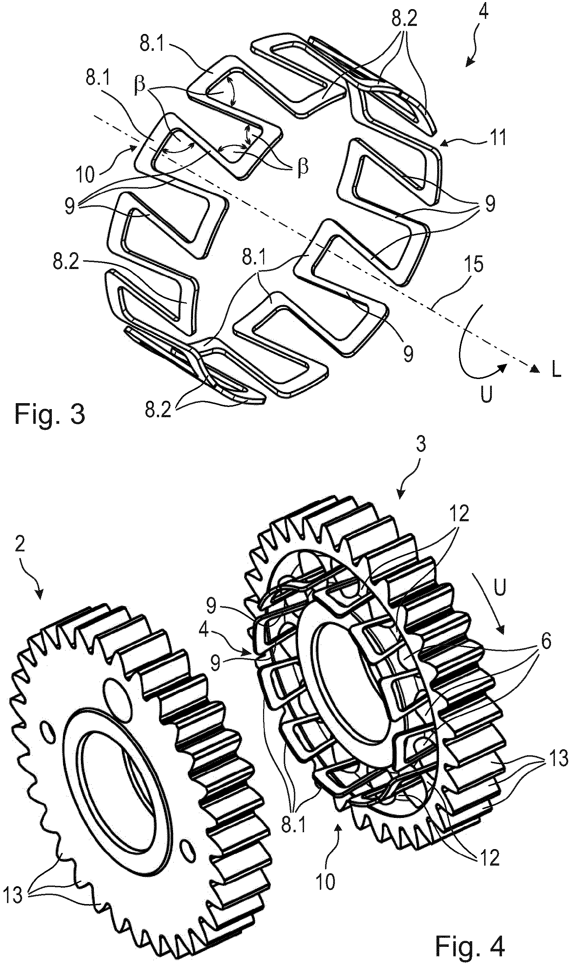

In Fig. 3 ist ein erstes Ausführungsbeispiel eines Federelements 4 für die in den Figuren 1 bis 5 gezeigte erste Ausführungsform des Zahnrads 1 gezeigt. Wie bereits beschrieben umfasst das Federelement 4 Schenkel 9 und Stege 8.1, 8.2. Die Stege 8.1, 8.2 erstrecken sich in Umfangsrichtung U des Zahnrads. Die Stege 8.1, 8.2 sind daher kreisbogenförmig um die Rotationsachse 15 gekrümmt oder stabförmig ausgebildet. Die Schenkel 9 erstrecken sich in axialer Richtung L des Zahnrads gesehen quer zu einer senkrecht zur Rotationsachse 15 des Zahnrades 1 verlaufenden Ebene. Jeder Steg 8.1, 8.2 ist an jedem seiner zwei Enden mit einem der Schenkel 9 verbunden. Das jeweils andere Ende der Schenkel 9 ist ebenfalls mit einem der Stege 8.2, 8.1 verbunden. In Umfangsrichtung nebeneinanderliegende Stege 8.1, 8.2 des Federelements sind also in axialer Richtung L gesehen beabstandet zueinander. Die Stege lassen sich also in erste Stege 8.1 und zweite Stege 8.2 aufteilen, wobei die jeweils ersten Stege 8.1 auf einer ersten Kreislinie liegen, die konzentrisch zur Rotationsachse 15 ist. Die jeweils zweiten Stege 8.2 liegen ebenfalls auf einer Kreislinie, die konzentrisch zur Rotationsachse 15 ist. Dadurch spannen die Schenkel 9 und die Stege 8.1, 8.2 eine Hülse mit einer zylindrischen Mantelfläche auf. Die Hülse könnte auch eine konische Form aufweisen. Die Schenkel 9 können jeweils mit den Stegen 8.1, 8.2 einen spitzen Winkel β einschließen. Vorzugsweise liegt der Winkel β in einem Bereich von 60 bis 90°. Das Federelement 4 ist also im Wesentlichen mäanderförmig. Dadurch wirkt das Federelement im Wesentlichen nur in Umfangsrichtung. Es tritt keine axiale Kraftkomponente auf.

Es wäre aber auch denkbar, dass das Federelement jegliche andere Wellenform aufweist, beispielsweise im Wesentlichen sinuswellenförmig oder im Wesentlichen zickzack-förmig ist, solange es seine zylindrische bzw. konische Hülsenform beibehält.

In Fig. 4 ist der Zusammenbau des Zahnrads 1 mit den beiden Zahnradteilen 2, 3 und dem Federelement 4 gezeigt. Das Federelement 4 wird in die Ausnehmungen 6 in den beiden Zahnradteilen 2, 3 eingesteckt. In Fig. 4 ist gezeigt, dass das Federelement 4 bereits in die Ausnehmungen 6 des zweiten Zahnradteils 3 eingesteckt ist. Das Federelement 4 liegt locker in den Ausnehmungen 6 des zweiten Zahnradteils. Dabei sind die Stege 8.2, die den Fußbereich 11 des Federelements 4 ausbilden, in den Ausnehmungen 6 des zweiten Zahnradteils 3 angeordnet. Vorzugsweise liegen die Stege 8.2 an dem Grund der Ausnehmungen 6 an. Da die Stege 8.1, 8.2 jeweils in einem spitzen Winkel mit den beiden Schenkel 9 verbunden sind, liegt das Federelement 4 im Wesentlichen nur im Fußbereich 11 an den Wänden der Ausnehmungen 6 des zweiten Zahnradteils 3 an. Die jeweils ersten Stege 8.1, d.h. die Stege, die den Kopfbereich 10 des Federelements 4 ausbilden sind zwischen den Ausnehmungen 6 angeordnet und überstrecken die materialgefüllten Bereiche 12 des Zahnradteils 3 zwischen den Ausnehmungen 6. Zur Montage des ersten Zahnradteils 2 auf dem zweiten Zahnradteil 3 mit dem eingesteckten Federelement 4 wird das erste Zahnradteil 2 in Umfangsrichtung gegenüber dem zweiten Zahnradteil 3 verdreht, so dass die Ausnehmungen des ersten Zahnradteils 2 über den materialgefüllten Bereichen 12 des zweiten Zahnradteils 3 angeordnet sind und die ersten Stege 8.1 des Federelements 4 in die Ausnehmungen des ersten Zahnradteils 2 eingeführt werden können. Die Schenkel 9 berühren die Wandungen der Ausnehmungen 6 in den beiden Zahnradteilen 2, 3 vorzugsweise nicht. Das Federelement greift also in Umfangsrichtung des Zahnrads abwechselnd in das erste Zahnradteil 2 und in das zweite Zahnradteil 3 ein.

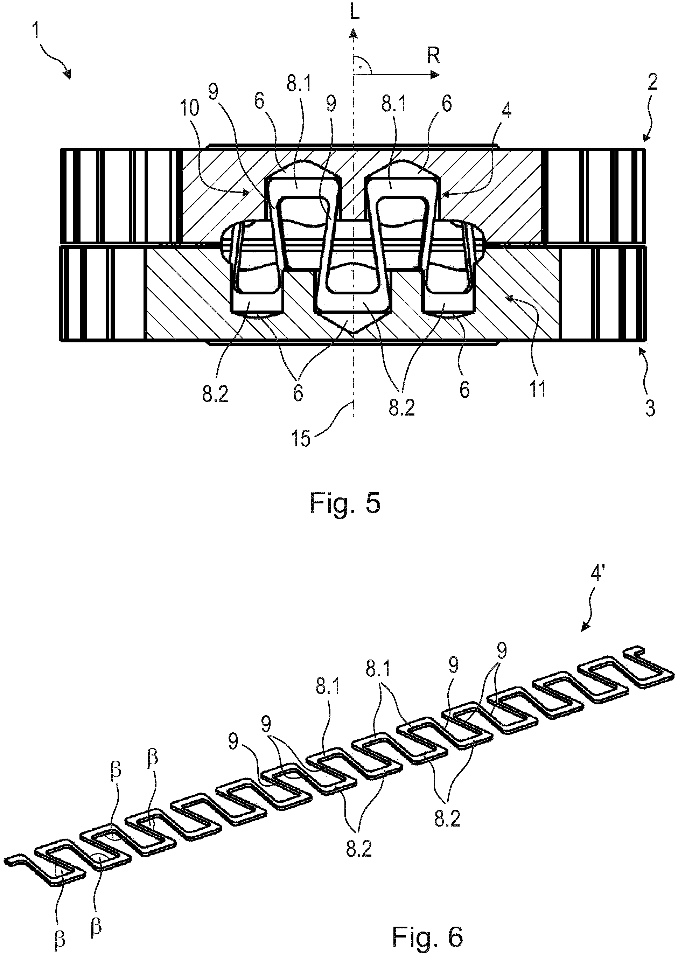

In Fig. 5 ist das Zahnrad 1 gemäß der ersten Ausführungsform im montierten Zustand in einem Schnitt entlang der Rotationsachse 15 gezeigt. Es ist nun nochmals zu sehen, dass die Ausnehmungen 6 in den beiden Zahnradteilen 2, 3 als Sacklochbohrungen ausgebildet sind. Die Ausnehmungen 6 im ersten Zahnradteil 2 sind versetzt zu den Ausnehmungen 6 im zweiten Zahnradteil 3 angeordnet. Das Federelement 4 ist in die Ausnehmungen 6 der beiden Zahnradteile 2, 3 eingesteckt. Dabei sind die ersten Stege 8.1 des Kopfbereichs 10 des Federelements 4 in den Ausnehmungen 6 des ersten Zahnradteils 2 angeordnet. Die in Umfangsrichtung U versetzt zu den ersten Stegen 8.1 angeordneten zweiten Stege 8.2 des Federelements 4, die den Fußbereich 11 des Federelements 4 ausbilden, sind in den Ausnehmungen 6 des zweiten Zahnradteils 3 angeordnet. Das Federelement 4 ist in Umfangsrichtung abwechselnd im ersten Zahnradteil 2 und im zweiten Zahnradteil 3 angeordnet. Die Stege 8.1 des Kopfbereichs 10 des Federelements 4 liegen an dem Grund der Ausnehmungen 6 im ersten Zahnradteil 2 an, ebenso liegen die Stege 8.2 des Fußbereich 11 des Federelements 4 an dem Grund der Ausnehmungen 6 im zweiten Zahnradteil 3 an. Die Schenkel 9 des Federelements 4 sind an jedem ihrer Enden mit einem Steg 8.1, 8.2 verbunden. Dabei schließen die Schenkel 9 mit dem jeweiligen Steg 8.1, 8.2 den spitzen Winkel β ein. Die Schenkel 9 berühren die Wandungen der Ausnehmungen 6 nicht.

Obwohl die beiden Zahnradteile 2, 3 als Gleichteile ausgebildet sind, fluchten die Zähne 13 der beiden Zahnradteile 2, 3 im entspannten Zustand des Federelements 4 nicht. Zur Montage des Zahnrads 1 mit einem Gegenzahnrad werden die beiden Zahnradteile 2, 3 entgegen der Kraft des Federelements 4 gegeneinander verdreht. Dadurch wird das Federelement 4 vorgespannt. Befindet sich das Zahnrad 1 in Eingriff mit dem Gegenzahnrad, so werden die beiden Zahnradteile 2, 3 durch das Federelement 4 wieder zurückgedreht, sodass die Flanken des einen Zahnradteils 2, 3 mit den vorderen Flanken des Gegenzahnrads in Kontakt kommen und die Flanken des jeweils anderen Zahnradteils 3, 2 mit den hinteren Flanken des Gegenzahnrads in Kontakt kommen. Das Federelement 4 wirkt nur in Umfangsrichtung des Zahnrads 1. Beim Spannen der Feder entsteht keine zusätzliche axiale Kraftkomponente, die zu Reibung und Verschleiß im Getriebe führen würde.

Fig. 6 zeigt ein zweites Ausführungsbeispiel eines Federelements 4' für das Zahnrad 1 aus den Figuren 1 bis 5. Auch dieses Federelement 4' umfasst wieder die Stege 8.1, 8.2 und die Schenkel 9. Dieses Federelement 4' unterscheidet sich von dem in Fig. 3 gezeigten Federelement 4 dadurch, dass es im nicht montierten Zustand flach ist und erst beim Einlegen in die Zahnradteile 2, 3 ringförmig geschlossen wird. In Fig. 6 ist das Federelement 4' als gestanztes Blech ausgebildet. Alternativ kann das Federelement 4' auch aus gelasertem Blech hergestellt sein. Die Stege 8.1, 8.2 und die Schenkel 9 haben daher einen im Wesentlichen quadratischen bzw. rechteckigen Querschnitt.

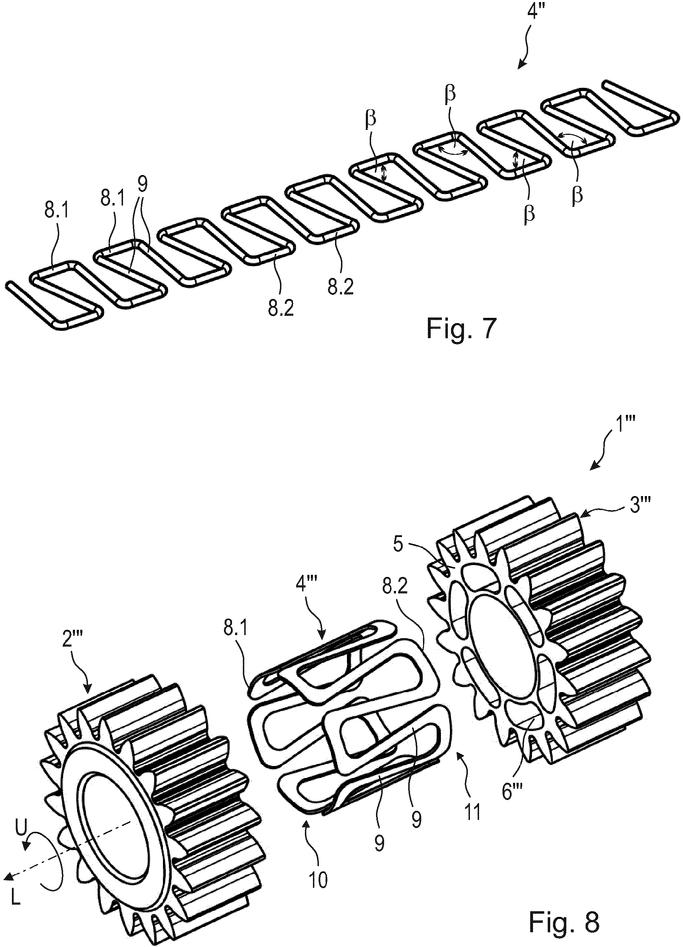

Noch ein weiteres Ausführungsbeispiel des Federelements 4" ist in Fig. 7 gezeigt. Auch das Federelement 4" gemäß dem dritten Ausführungsbeispiel ist im nicht montierten Zustand flach und wird erst beim Einlegen in die Zahnradteile 2, 3 ringförmig geschlossen. Das Federelement 4" ist aus einem Draht in die in Bezug auf das erste Ausführungsbeispiel beschriebene gewünschte Mäanderform gebogen und weist die Stege 8.1, 8.2 und die Schenkel 9 auf. Die Stege 8.1, 8. 2 und die Schenkel 9 haben einen im Wesentlichen runden Querschnitt.

Die in den Figuren 6 und 7 gezeigten Federelemente 4', 4" können ebenfalls die in Bezug auf die Figuren 1 bis 5 ausführlich beschriebene Mäanderform aufweisen.

In den Figuren 8 bis 11 ist ein zweites Ausführungsbeispiel eines Zahnrads 1'" in Explosionsdarstellung gezeigt. Auch dieses Zahnrad 1'" umfasst ein erstes Zahnradteil 2'" und ein zweites Zahnradteil 3'" die die über ein Federelement 4'" gegeneinander verspannt werden. Wie bereits beschrieben, sind die Zahnradteile 2"', 3'" als Gleichteile ausgebildet. Jedes Zahnradteil 2"', 3'" weist an einer Stirnseite 5 Ausnehmungen 6'" auf. Das zweite Ausführungsbeispiel unterscheidet sich von dem in Bezug auf die Figuren 1 bis 5 beschriebenen ersten Ausführungsbeispiel im Wesentlichen nur dadurch, dass die Ausnehmungen 6'" als taschenförmige Bohrungen ausgebildet sind. Im gezeigten Ausführungsbeispiel sind sechs taschenförmige Ausnehmungen 6'" ausgebildet. Der Querschnitt der Ausnehmungen 6'" entspricht einem Langloch, das in Umfangsrichtung des Zahnrads 1'" gekrümmt ist.

Das Federelement 4'" ist ebenfalls wieder mäanderförmig ausgebildet, mit sich in Umfangsrichtung erstreckenden ersten und zweiten Stegen 8.1, 8.2, die über sich in axialer Richtung L des Zahnrads erstreckende Schenkel 9 miteinander verbunden sind.

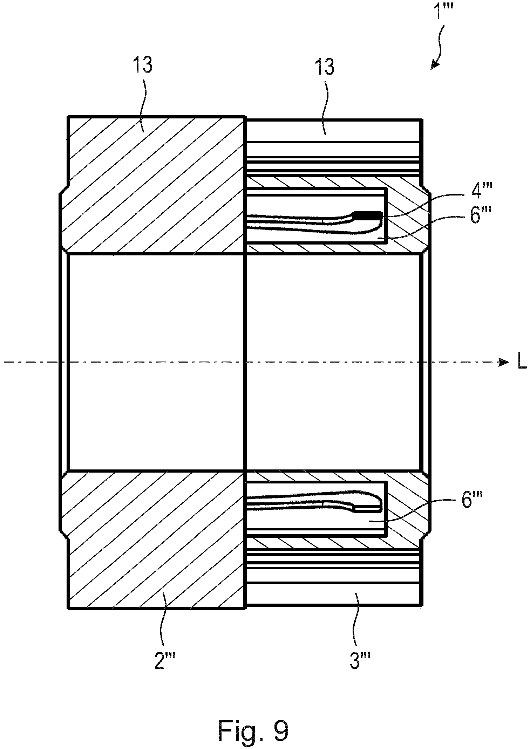

Fig. 9 zeigt einen Schnitt in axialer Richtung durch das Zahnrad 1'"' im montierten Zustand. Das Federelement 4'" ist in den Ausnehmungen 6'" in den beiden Zahnradteilen 2"', 3'" aufgenommen.

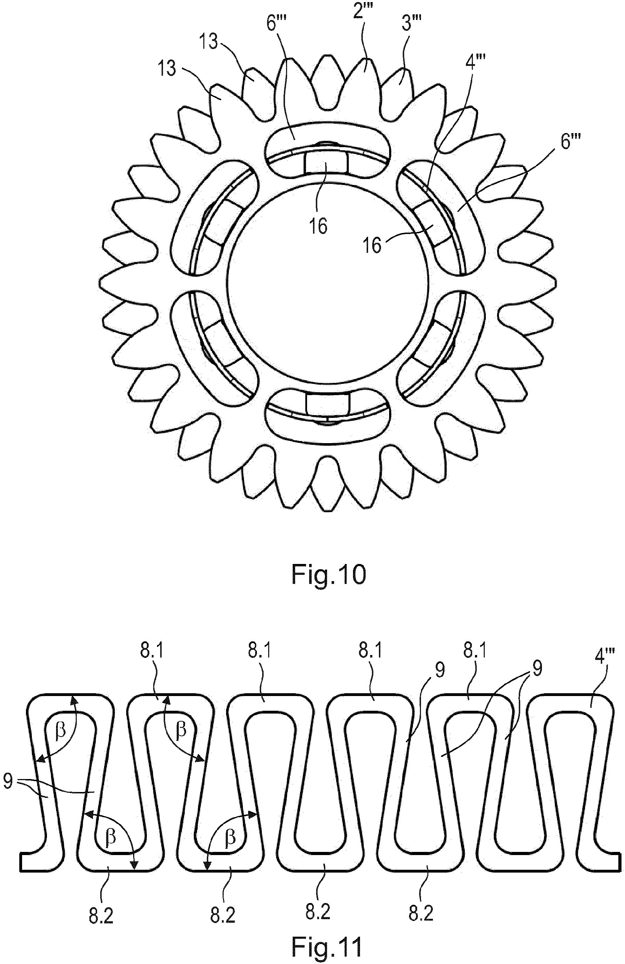

In Fig. 10 ist das Zahnrad 1'" in einem Schnitt senkrecht zur axialen Richtung L dargestellt. Dabei sind die Zahnradteile 2"', 3'" im entspannten Zustand des Federelements 4'" derart angeordnet, dass ihre Zähne 13 nicht miteinander fluchten. Zur Montage wird das Federelement 4'" um einen halben Zahn verspannt. Eine mögliche Federrate in diesem Ausführungsbeispiel ist 7,8 mNm/°.

Zudem kann vorgesehen werden, dass die Ausnehmungen 6'" in den beiden Zahnradteilen einen Vorsprung 16 aufweisen. So kann z.B. die Wandung der Ausnehmungen 6'" nach innen gewölbt sein. Durch diesen Vorsprung 16 kann das Federelement formschlüssig in den Ausnehmungen 6'" in den Zahnradteilen gehalten werden. Dies ist beispielsweise als Montage- bzw. Transportsicherung vorteilhaft.

In Fig. 11 ist das Federelement 4'" des zweiten Ausführungsbeispiels des Zahnrads 1'" im nicht montierten Zustand gezeigt. Das Federelement 4'" ist wieder rechteckig flach bzw. streifenförmig und wird erst bei der Montage in die Zahnradteile zu einer Hülse gebogen und/oder geschlossen. Das Federelement 4'" kann bspw. aus gelasertem oder gestanztem Blech hergestellt sein. Das Federelement 4'" umfasst wieder Stege 8.1, 8.2, die durch Schenkel 9 miteinander verbunden sind. Die Schenkel 9 schließen mit den mit ihnen verbundenen Stegen 8.1, 8.2 jeweils einen spitzen Winkel β ein.

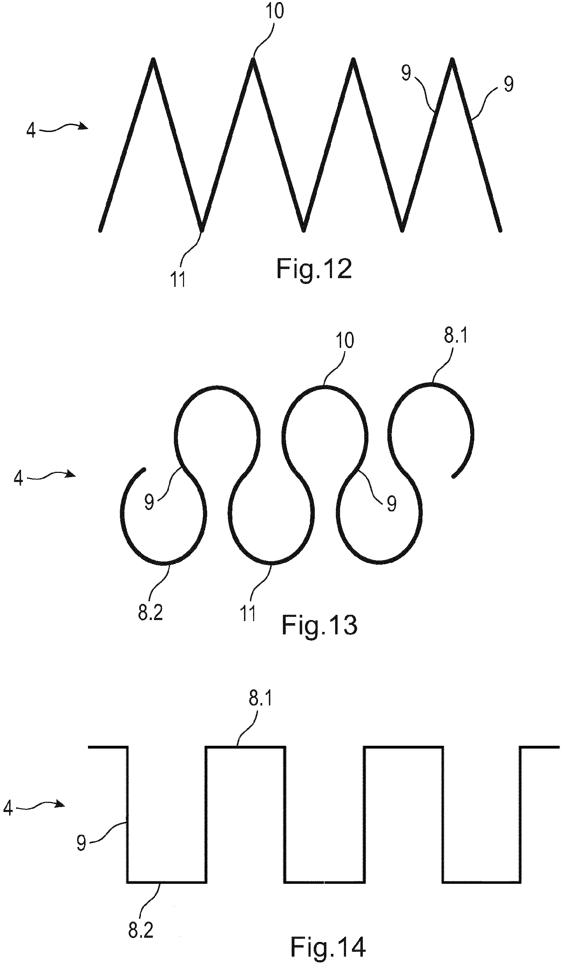

Anhand der Fig. 12 und 13 sind weitere Ausgestaltungen eines Federelements 4 dargestellt. Das Federelement kann als gewickelte Hülse ausgestaltet sein und die Fig. 12 und 13 zeigen jeweils einen Ausschnitt der Abwicklung des Federelementes 4.

Die Fig. 12 stellt einen strengen Zick-Zack-Verlauf des Federelements 4 dar. Dabei umfasst das Federelement 4 mindestens zwei an jeweils einem ihrer Enden miteinander verbundene Schenkel 9, wobei mindestens einer der Schenkel 9 derart ausgerichtet ist, dass der mindestens eine Schenkel 9 mit seiner Längserstreckung im Wesentlichen quer zu einer senkrecht zur Rotationsachse 15 des Zahnrades 1, 1'" verlaufenden Ebene ausgerichtet ist. Die Stege 8.1 und 8.2 verschwinden in ihrer Länge vollständig. Lediglich die schräg zueinander verlaufenden Schenkel 9 grenzen aneinander an. Die taschenförmigen Ausnehmungen an den Zahnradteilen können entsprechend angepasst sein.

In der Fig. 13 ist die Abwicklung eines Bereichs des Federelementes 4 dargestellt, bei der die Stege 8.1 und 8.2 jeweils die Form eines Halbrings aufweisen und die Schenkel 9 in ihrer Längserstreckung S-förmig gekrümmt sind. Dabei umfasst das Federelement 4 mindestens zwei an jeweils einem ihrer Enden miteinander verbundene Stege 8.1, 8.2 beziehungsweise Schenkel 9 wobei mindestens einer der Stege 8.1, 8.2 beziehungsweise Schenkel 9 derart ausgerichtet ist, dass der mindestens eine Steg 8.1, 8.2 beziehungsweise Schenkel 9 mit seiner Längserstreckung im Wesentlichen quer zu einer senkrecht zur Rotationsachse 15 des Zahnrades 1 verlaufenden Ebene ausgerichtet ist.

In der Fig. 14 ist die Abwicklung eines Bereichs eines weiteren Federelementes 4 dargestellt. Dabei umfasst das Federelement 4 mindestens zwei an jeweils einem ihrer Enden miteinander verbundene Stege 8.1, 8.2 beziehungsweise Schenkel 9, wobei mindestens einer der Schenkel 9 derart ausgerichtet ist, dass der mindestens eine Schenkel 9 mit seiner Längserstreckung im Wesentlichen quer zu einer senkrecht zur Rotationsachse 15 des Zahnrades 1 verlaufenden Ebene ausgerichtet ist. Mit anderen Worten, der Schenkel kann mit seiner Längserstreckung auch in axialer Richtung des Zahnrades ausgerichtet sein.

In allen gezeigten Ausführungsbeispielen ist das Federelement einteilig ausgebildet, entweder als geschlossene Hülse oder als Streifen, der bei der Montage zur Hülse gebogen und/oder geschlossen wird. Das flache Federelement kann aber auch bereits vor dem einlegen in die Zahnradteile ringförmig geschlossen werden. Die Hülse kann zylindrisch oder konisch sein. Dies hat den Vorteil, dass insbesondere für kleine Getriebe mit einem Durchmesser von ca. 10 bis 50 mm die Montage sehr einfach ist, da nur ein Teil in die Zahnradteile eingesetzt werden muss. Es wäre aber auch möglich, dass das Federelement aus mehreren Einzelteilen besteht, die beispielsweise die Form von Hülsenabschnitten haben.

Das gezeigte Zahnrad mit den beiden Zahnradteilen, die über ein Federelement miteinander verspannt werden, kann vorzugsweise als Planetenrad in einem Planetengetriebe eingesetzt werden. Es ist aber auch die Verwendung in anderen Getriebetypen wie beispielsweise Stirnradgetrieben möglich.

In weiteren Ausführungsbeispielen kann das mindestens eine Federelement 4 mäanderförmig ausgebildet sein, wobei die mäanderförmigen Ausbuchtungen bzw. Schlaufen des Federelement in axialer Richtung des Zahnrades ausgerichtet sind. Die mäanderförmigen Ausbuchtungen des Federelementes können in die Ausnehmungen 6 des ersten und zweiten Zahnradteils 2, 3 eingelegt werden. Das Federelement kann eine, zwei, drei oder eine Vielzahl von mäanderförmigen Ausbuchtungen umfassen. Die Ausbuchtungen des mäanderförmigen Federelementes sind im montierten Zustand des Zahnrades für das spielfreie Getriebe abwechselnd jeweils in die Ausnehmungen 6 des ersten und zweiten Zahnradteils 2, 3 eingelegt. Durch das mäanderförmige Federelement 4 wird eine Verspannung des ersten und zweiten Zahnradteils 2, 3 erzielt, wodurch das Getriebespiel reduziert oder eliminiert wird. Das Federelement kann ringförmig ausgestaltet sein, wobei die beiden Enden des Federelementes 4 gebogen und/oder geschlossen sind, dadurch ist das Federelement hülsenförmig und kann bei der Montage sehr einfach in die Ausnehmungen in den beiden Zahnradteilen eingesteckt werden.

Das mindestens eine Federelement 4 kann in Ausführungsbeispielen auch mindestens zwei an jeweils einem ihrer Enden miteinander verbundene stabförmige Bereiche 8.1, 8.2, 9 umfassen, wobei mindestens einer der stabförmigen Bereiche 8.1, 8.2, 9 mit seiner Längserstreckung in axialer Richtung L des Zahnrades 1, 1 ausgerichtet ist.

### Bezugszeichenliste

- 1, 1'": Zahnrad
- 2, 2"': erstes Zahnradteil
- 3, 3"': zweites Zahnradteil
- 4, 4', 4", 4'": Federelement
- 5: Stirnseite
- 6, 6'": Ausnehmung
- 7: Nabe
- 8.1, 8.2: Steg
- 9: Schenkel
- 10: Kopfbereich Federelement
- 11: Fußbereich Federelement
- 12: materialgefüllte Bereiche
- 13: Zähne
- 14: Zahneingriffsbereich
- 15: Rotationsachse
- 16: Vorsprung

- L: axiale Richtung
- R: radialer Richtung
- U: Umfangsrichtung
- β: Winkel zwischen Steg und Schenkel

## Patentansprüche

1. Zahnrad (1, 1"') für ein spielfreies Getriebe mit einem ersten Zahnradteil (2, 2"') und einem zweiten Zahnradteil (3, 3'"), deren Zahneingriffsbereiche (14) in Richtung der Rotationsachse (15) des Zahnrads (1, 1"') gesehen nebeneinander angeordnet sind und die mittels mindestens einem in Umfangsrichtung (U) des Zahnrads (1, 1"') wirkenden Federelement (4, 4', 4", 4"') gegeneinander verspannbar sind, **dadurch gekennzeichnet, dass** das mindestens eine Federelement (4, 4', 4", 4"') mindestens zwei an jeweils einem ihrer Enden miteinander verbundene stabförmige Bereiche (8.1, 8.2, 9) umfasst, wobei mindestens einer der stabförmige Bereiche (8.1, 8.2, 9) derart ausgerichtet ist, dass der mindestens eine stabförmige Bereich (8.1, 8.2, 9) mit seiner Längserstreckung im Wesentlichen quer zu einer senkrecht zur Rotationsachse (15) des Zahnrades (1, 1"') verlaufenden Ebene ausgerichtet ist.

2. Zahnrad (1, 1"') nach Anspruch 1, **dadurch gekennzeichnet, dass** das erste Zahnradteil (2, 2"') und das zweite Zahnradteil (3, 3"') an ihren einander zugewandten Stirnseiten (5) jeweils mindestens eine Ausnehmung (6, 6"') aufweisen, wobei mindestens einer der stabförmige Bereiche (8.1, 8.2, 9) des mindestens einen Federelements (4, 4', 4", 4"') mit einem Ende in der Ausnehmung (6, 6"') des ersten Zahnradteils (2, 2"') und mit dem anderen Ende in der Ausnehmung (6, 6"') des zweiten Zahnradteils (3, 3"') angeordnet ist.

3. Zahnrad (1, 1"') nach einem der Ansprüche 1 oder 2, **dadurch gekennzeichnet, dass** einer der stabförmigen Bereiche des mindestens einen Federelements (4, 4', 4", 4"') als Schenkel (9) ausgebildet ist, der mit seiner Längserstreckung im Wesentlichen quer zu einer senkrecht zur Rotationsachse (15) des Zahnrades verlaufenden Ebene ausgerichtet ist, und der andere stabförmige Bereiche des mindestens einen Federelements (4, 4', 4", 4"') als Steg (8.1, 8.2) ausgebildet ist, der sich in Umfangsrichtung (U) des Zahnrads erstreckt.

4. Zahnrad (1, 1"') nach einem der Ansprüche 1 bis 3, **dadurch gekennzeichnet, dass** mindestens zwei der stabförmigen Bereiche (8.1, 8.2, 9) des mindestens einen Federelements (4, 4', 4", 4"') einen spitzen Winkel (β) miteinander einschließen.

5. Zahnrad (1, 1"') nach mindestens einem der Ansprüche 1 bis 4, **dadurch gekennzeichnet, dass** das mindestens eine Federelement (4, 4', 4", 4"') eine Mehrzahl von an ihren Enden miteinander verbundenen stabförmigen Bereichen umfasst, die abwechselnd als Stege (9) und als Schenkel (8.1, 8.2) ausgebildet sind.

6. Zahnrad (1, 1"') nach Anspruch 3 bis 5, **dadurch gekennzeichnet, dass** das erste Zahnradteil (2, 2"') und das zweite Zahnradteil (3, 3"') eine Mehrzahl von Ausnehmungen (6, 6"') aufweisen und die Stege (8.1, 8.2) des mindestens einen Federelements (4, 4', 4", 4"') abwechselnd in einer Ausnehmung (6, 6"') des ersten Zahnradteils (2, 2"') und in einer Ausnehmung (6, 6"') des zweiten Zahnradteils (3, 3"') angeordnet sind.

7. Zahnrad (1) nach Anspruch 2 bis 6, **dadurch gekennzeichnet, dass** die Ausnehmungen (6) in den beiden Zahnradteilen (2, 3) als zylindrische Bohrungen ausgebildet sind.

8. Zahnrad (1"') nach Anspruch 2 bis 6, **dadurch gekennzeichnet, dass** die Ausnehmungen (6"') in den beiden Zahnradteilen (2"', 3"') als taschenförmige Bohrungen ausgebildet sind.

9. Zahnrad (1"') nach einem der Ansprüche 2 bis 8, **dadurch gekennzeichnet, dass** die Ausnehmungen (6"') in den beiden Zahnradteilen (2"'; 3"') einen Vorsprung (16) als Montage- bzw. Transportsicherung für das mindestens eine Federelement (4, 4', 4", 4"') aufweisen.

10. Zahnrad (1, 1"') nach mindestens einem der vorhergehenden Ansprüche, **dadurch gekennzeichnet, dass** das erstes Zahnradteil (2, 2"') und das zweites Zahnradteil (3, 3"') identisch ausgebildet sind.

11. Zahnrad (1, 1"') nach mindestens einem der vorhergehenden Ansprüche, **dadurch gekennzeichnet, dass** sich das Federelement (4, 4', 4", 4"') um den gesamten Umfang des Zahnrads (1, 1"') erstreckt.

12. Zahnrad (1, 1'") nach mindestens einem der vorhergehenden Ansprüche, **dadurch gekennzeichnet, dass** das Federelement (4) ringförmig gebogen und/oder geschlossen ist.

13. Zahnrad (1, 1"') nach mindestens einem der vorhergehenden Ansprüche, **dadurch gekennzeichnet, dass** das Federelement vor der Montage rechteckig flach bzw. streifenförmig (4', 4", 4"') ist und bei der Montage in den beiden Zahnradteilen (2, 3; 2"', 3"') ringförmig gebogen und/oder geschlossen wird.

14. Zahnrad (1, 1"') nach mindestens einem der vorhergehenden Ansprüche, **dadurch gekennzeichnet, dass** das Zahnrad als Planetenrad für ein Planetengetriebe ausgebildet ist.

15. Spielfreies Getriebe mit mindestens einem Zahnrad (1, 1'") nach einem der Ansprüche 1 bis 14.
